# EUROPÄISCHE PATENTSCHRIFT

(11) **EP 3 231 942 B1**
(45) Veröffentlichungstag und Bekanntmachung des Hinweises auf die Patenterteilung: **07.08.2019**
(21) Anmeldenummer: 17166082.2
(22) Anmeldetag: 11.04.2017
(51) Int. Cl.: E02B 8/08

(54) **FISCHAUFSTIEGSVORRICHTUNG**
FISH LADDER
DISPOSITIF DE PASSE À POISSONS

(30) Priorität: 12.04.2016 DE 202016101933 U
(43) Veröffentlichungstag der Anmeldung: 18.10.2017
(73) Patentinhaber: HTL Patentverwaltungs-UG (haftungsbeschränkt), 97241 Oberpleichfeld (DE)
(72) Erfinder: ZEILER, Georg, 91469 Hagenbüchach (DE); FLACH, Bernd, 91233 Neunkirchen am Sand (DE)
(74) Vertreter: Beyer, Carsten

(56) Entgegenhaltungen:
- WO-A1-2005/007975
- DE-A1-102013 201 427
- JP-A- H0 782 727
- JP-A- 2009 287 208

## Beschreibung

Die vorliegende Erfindung betrifft eine Fischaufstiegsvorrichtung nach dem Oberbegriff des Anspruchs 1.

Danach betrifft die Erfindung eine Vorrichtung für den Fischaufstieg und/oder den Fischabstieg zur Überwindung einer Höhendifferenz zwischen einem Unterwasser und einem Oberwasser, wobei die Vorrichtung eine Schleusenkammer aufweist, welche sich zwischen dem Unterwasser und dem Oberwasser erstreckt und diese strömungstechnisch miteinander verbindet, und welche gegenüber dem Unterwasser mit einer unteren Schleusentür und gegenüber dem Oberwasser mit einer oberen Schleusentür absperrbar ist.

Des Weiteren betrifft die Erfindung Verfahren zum Betrieb einer erfindungsgemäßen Vorrichtung.

Eingangs genannte Vorrichtungen sind auch als Fischaufstiegshilfe oder -anlage, Fischpass, Fischwanderhilfe u.a. bekannt. Dabei handelt es sich um wasserbauliche Einrichtungen an Gewässern, um Fischen im Rahmen der Fischwanderung die Möglichkeit zu geben, eine o.g. Höhendifferenz, insbesondere im Bereich von Querbauwerken (z.B. Stauwehren) oder Wasserfällen, überwinden zu können.

Fische wandern innerhalb von Gewässersystemen, um eine optimale Nutzung vorhandener Ressourcen in Bezug auf Ernährung, Wachstum, Fortpflanzung, Schutz vor Feinden etc. zu erreichen. Erst durch die Vernetzung von Lebensräumen profitieren Fischpopulationen von der Verfügbarkeit unterschiedlicher Ressourcen und Habitate im Gewässersystem. Eine Fragmentierung des Fischlebensraums hat für den Bestand der meisten Fischarten negative Auswirkungen, die langfristig zu einem Rückgang bis hin zum Verlust ganzer Fischpopulationen führen können. Die Durchgängigkeit von Gewässern für Fische mit dem Ziel der Vernetzung von Lebensräumen stellt somit eine Voraussetzung für den Erhalt stabiler Fischpopulationen dar.

Aus dem Stand der Technik sind eine Reihe unterschiedlicher Arten von Fischaufstiegsvorrichtungen bekannt. Lediglich beispielhaft wird verwiesen auf: "Handbuch Querbauwerke", Hrsg.: Ministerium für Umwelt und Naturschutz, Landwirtschaft und Verbraucherschutz des Landes Nordrhein-Westfalen, 1. Auflage 2005, ISBN 3-9810063-2-1, und "Leitfaden zum Bau von Fischaufstiegshilfen", Hrsg.: Bundesministerium für Land- und Forstwirtschaft, Umwelt und Wasserwirtschaft, Wien, AT, 2012, abrufbar unter www.bmlfuw.gv.at, Abrufdatum 04.04.2016.

Eine Fischaufstiegsvorrichtung in Form einer sog. Fischtreppe ist bspw. aus CH 77885 A bekannt.

Eine Vorrichtung in Form eines bekannten Schlitzpasses (Vertical Slot Pass) wird u.a. beschrieben in Gebler, R.-J.: Dimensionierung von Schlitzpässen - Anforderungen der Fische und der Hydraulik, in: WasserWirtschaft 7/8 (2015), S. 73.

Diese Vorrichtungen sind für sich gesehen bewährt, benötigen jedoch insbesondere bei der Überwindung größerer Höhenunterschiede eine erhebliche Grundfläche und Bauraum, was im Speziellen in Naturschutzgebieten und bei beengten räumlichen Verhältnissen, z.B. bei bereits existierender benachbarter Bebauung, ausscheidet.

Insbesondere für die Überwindung größerer Höhenunterschiede sind Fischlifte bekannt, bspw. aus DE 10 2014 001 825 A1 und DE 10 2015 101 989 A1. Dabei werden Fische in einem zwischen Unter- und Oberwasser verfahrbaren Behälter gesammelt und transportiert. Der Fischlift arbeitet dabei diskontinuierlich und der Schleusvorgang kann längere Zeit in Anspruch nehmen. Während des Transports kommt die natürliche, gegen die Gewässerströmung gerichtete Bewegungsrichtung der Fische i.A. nicht zum Tragen, was einige Fischarten nicht gut tolerieren. Fischlifte sind ferner mit einem nicht unerheblichen technischen und finanziellen Aufwand verbunden.

Eine gattungsbildende Vorrichtung ist aus DE 10 2013 201 427 A1 bekannt. Gemäß dortiger Figuren 1 und 2 erstreckt sich zwischen dem Unterwasser und dem Oberwasser eine Verschließeinrichtung, ein Zwischenbecken, ein Sammelbecken, ein Aufstiegsschacht sowie eine weitere Verschließeinrichtung gegenüber dem Oberwasser. Den aus dem Unterwasser in das Sammelbecken gelockten Fischen wird dort eine künstliche Ringströmung angeboten, um ein erneutes Verlassen des Sammelbeckens zu verhindern. In diskontinuierlicher Weise wird periodisch das Sammelbecken gegenüber dem Unterwasser verschlossen, der Wasserspiegel bis zum Erreichen des Höhenniveaus des Oberwassers erhöht und die dortige Verschließeinrichtung geöffnet, um den im Sammelbecken gesammelten Fischen den Übertritt ins Oberwasser zu ermöglichen. Eine solche Anlage kann auch als Fischschleuse bezeichnet werden. Auch diese Vorrichtung weist jedoch, insbesondere bei nennenswerten Höhenunterschieden zwischen Unter- und Oberwasser, einen erheblichen Platzbedarf auf und bietet keine kontinuierliche Fahrweise.

Der vorliegenden Erfindung liegt die Aufgabe zugrunde, zumindest einen der oben benannten Nachteile zu überwinden.

Des Weiteren liegt der Erfindung die Aufgabe zugrunde, einen Beitrag zu einer platzsparenden, kosteneffektiven, technisch einfachen, vielseitig einsetzbaren und an die jeweiligen Gegebenheiten anpassbaren Fischaufstiegsvorrichtung zu leisten.

Einen Beitrag zur Lösung mindestens einer der vorstehend genannten Aufgaben leistet eine Vorrichtung mit den Merkmalen des Anspruchs 1.

Erfindungsgemäße Verfahren sind mit den Merkmalen der Ansprüche 12 und 14 angegeben.

Vorteilhafte Ausgestaltungen und Weiterbildungen der Erfindung sind Gegenstand der jeweils nachgeordneten Ansprüche.

Im Rahmen der vorliegenden Erfindung wird zunächst eine Vorrichtung der eingangs genannten Art vorgeschlagen, welche durch die kennzeichnenden Merkmale des Anspruchs 1 weitergebildet ist.

Danach erstreckt sich die Schleusenkammer in Form einer dreidimensionalen Spirale zwischen dem Unterwasser und dem Oberwasser.

Als Schleusenkammer in Form einer dreidimensionalen Spirale wird dabei eine Schleusenkammer verstanden, welche in eine Kurvenform längserstreckt ist, wobei sich diese Kurve mit einer Steigung um eine vertikale Achse windet, so dass der Höhenunterschied zwischen Unterwasser und Oberwasser mit dieser gewundenen Kurve überbrückt wird.

So kann auch zur Überwindung großer Höhenunterschiede eine sich zwischen dem Unterwasser und dem Oberwasser erstreckende Schleusenkammer vorgesehen werden, welche mit einer moderaten Steigung spiralförmig ansteigt. Die Schleusenkammer windet sich dabei mit einer Steigung um einen Innenraum, und kann sich in einem bevorzugten Beispiel mit konstanter Steigung um den Mantel eines imaginären oder tatsächlich vorhandenen Innenzylinders winden, wodurch sich eine zylindrische Spirale ergeben würde.

Den aquatischen Lebewesen kann damit eine stets moderate Steigung angeboten werden, welche sie problemlos durchwandern können. Die Vorrichtung kann damit auch große Höhenunterschiede bedienen.

Gleichzeitig zeigt die Vorrichtung lediglich einen geringen Platzbedarf und einen geringen Bauaufwand. Sie besitzt wenige bewegliche Teile und die Steuerung ist einfach. Die Vorrichtung kann bei sonst unveränderten Abmessungen einfach auf jeden beliebigen Höhenunterschied skaliert hergestellt werden.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale vorteilhafter Weiterbildungen lassen sich dabei einzeln oder auch in beliebiger Kombination realisieren, wodurch weitere vorteilhafte Ausgestaltungen der Erfindung geschaffen werden.

Bevorzugt kann sich die Schleusenkammer in Form einer zylindrischen Spirale zwischen dem Unterwasser und dem Oberwasser erstrecken. Eine zylindrische Spirale kann auch als Wendel, Helix oder Schraubenlinie bezeichnet werden. Somit kann sich die Schleusenkammer bevorzugt wendelförmig zwischen dem Unterwasser und dem Oberwasser erstrecken.

Die Vorrichtung kann insgesamt eine Schleusenkammer aufweisen. Vorzugsweise weist die Vorrichtung jedoch zwei oder mehr, und insbesondere drei oder mehr, strömungstechnisch voneinander getrennte Schleusenkammern mit jeweils einer unteren Schleusentür und einer oberen Schleusentür auf.

Besonders bevorzugt ist eine Vorrichtung, welche genau drei strömungstechnisch voneinander getrennte Schleusenkammern mit jeweils einer unteren Schleusentür und einer oberen Schleusentür aufweist.

Vorzugsweise sind innerhalb einer Vorrichtung mit n Schleusenkammern diese als n-gängige Wendel (Helix) angeordnet. Die Variable n bezeichnet dabei eine ganze Zahl mit dem Wert 2 oder mehr.

Sind 2 Kammern vorgesehen (n=2), weisen diese vorzugsweise einen Höhenabstand auf, der der 1/2 Ganghöhe einer Kammer entspricht, und sind daher auf einer Ebene gesehen vorzugsweise um einen Winkel von 180° (1/2 Umdrehung) gegeneinander versetzt. Bei n=3 beträgt der Höhenabstand benachbarter Kammern vorzugsweise 1/3 der Ganghöhe einer Kammer, und die Kammern sind auf einer Ebene gesehen vorzugsweise um einen Winkel von 120° (1/3 Umdrehung) gegeneinander versetzt. In einem solchen Fall weisen übereinander angeordnete Schleusenkammern jeweils dieselbe Kammerhöhe auf.

Alternativ können übereinander angeordnete Schleusenkammern jeweils verschiedene Kammerhöhen aufweisen.

Auch in Form einer sonstigen, d.h. nicht streng zylindrischen dreidimensionalen Spirale, lassen sich verschiedene Schleusenkammern auf eine der oben beschriebenen Weisen vorteilhaft übereinander anordnen.

Gemäß der Erfindung ist die Schleusenkammer in Bezug auf sämtliche Richtungen senkrecht zur Längsrichtung (diese ist gleichbedeutend mit der Strömungsrichtung und auch der Wanderrichtung der Fische) der Kammer geschlossen ausgeführt, und weist insbesondere einen Boden, eine Innenwand, eine Außenwand und eine Decke auf. Eine solche Schleusenkammer ist folglich vollständig mit Wasser flutbar. Die Kammer ist daher besonders dazu geeignet, kontinuierlich von Fischen durchwandert zu werden.

Weiter bevorzugt ist, dass, gesehen über die Höhe der Vorrichtung, die Decke einer Schleusenkammer gleichzeitig den Boden des darüber liegenden Ganges derselben Schleusenkammer oder den Boden einer darüber angeordneten weiteren Schleusenkammer bildet. So lässt sich eine besonders platzsparende und kompakte Vorrichtung bei gleichzeitig geringem Materialeinsatz realisieren.

Bevorzugt weist eine Schleusenkammer, in Längsrichtung gesehen, einen rechteckigen Strömungsquerschnitt auf. Dies vereinfacht die Herstellung der Vorrichtung und den Fischen kann über die gesamte Längserstreckung der Kammer ein gleich bleibender Strömungsquerschnitt angeboten werden.

Vorzugsweise ist die Vorrichtung als Hohlzylinder ausgebildet, wobei die Innenwand des Hohlzylinders die Innenwand der Schleusenkammer bzw. der Schleusenkammern bildet und die Außenwand des Hohlzylinders die Außenwand der Schleusenkammer bzw. der Schleusenkammern bildet. Eine solche Ausgestaltung lässt sich sowohl für Vorrichtungen mit einer Schleusenkammer als auch für Vorrichtungen mit n Schleusenkammern (n=2, 3,...) realisieren.

In einer solchen Vorrichtung können, gemäß einer weiteren vorteilhaften Weiterbildung, die oberen und/oder die unteren Schleusentüren in der Außenwand des Hohlzylinders ausgebildet sein.

Je nach den örtlichen Gegebenheiten erweist sich alternativ eine weitere Ausführungsform als vorteilhaft, bei der die oberen und/oder die unteren Schleusentüren in der Innenwand des Hohlzylinders ausgebildet sind.

In einer weiteren vorteilhaften Ausgestaltung der Vorrichtung sind die oberen Schleusentüren in der Außenwand des Hohlzylinders ausgebildet, während die unteren Schleusentüren in der Innenwand des Hohlzylinders ausgebildet sind. Eine weitere mögliche Ausgestaltung weist den umgekehrten Aufbau auf.

Favorisiert ist ferner eine Ausgestaltung, bei der die Schleusentüren auch in geschlossenem Zustand für eine Dotationsströmung passierbar sind. Eine Dotationsströmung nutzt in besonders vorteilhafter Weise das positiv rheotaktische Verhalten von Fischen, welche stets gegen eine Strömung anschwimmen. Eine Dotationsströmung in der Schleusenkammer kann dabei sowohl zum Anlocken der Fische in die Kammer als auch zum Durchleiten der Fische durch die Kammer genutzt werden.

In einer weiteren vorteilhaften Ausführungsform enthält eine Schleusenkammer eine oder mehrere zusätzliche Zwischenwände zur vorteilhaften Strömungslenkung.

Ein erfindungsgemäßes Verfahren zum Betrieb einer erfindungsgemäßen Vorrichtung zeichnet sich dadurch aus, dass, bezogen auf eine Schleusenkammer, stets zumindest eine Schleusentür, nämlich die obere oder die untere Schleusentür, geschlossen ist. Diese Betriebsweise verhindert eine zu große Gegenströmung in der Kammer oder auch ein Leerlaufen.

Gleichzeitig kann eine günstige Dotationsströmung aufrechterhalten werden. So wird vorzugsweise bei geöffneter unterer Schleusentür die geschlossene obere Schleusentür von einer Dotationsströmung passiert, und/oder wird bei geöffneter oberer Schleusentür die geschlossene untere Schleusentür von einer Dotationsströmung passiert.

Ein weiteres Verfahren gemäß der Erfindung betrifft den Betrieb einer Vorrichtung mit mindestens drei Schleusentüren und ist dadurch gekennzeichnet, dass zu jedem Zeitpunkt von den zumindest drei Schleusentüren sowohl der Ebene des Oberwassers als auch der Ebene des Unterwassers jeweils zumindest eine geschlossen ist, zumindest eine betätigt wird und zumindest eine geöffnet ist. Damit steht den Fischen sowohl auf der Ebene des Unterwassers als auch auf der Ebene des Oberwassers immer zumindest eine geöffnete Schleusentür zur Verfügung, welche derzeit auch nicht betätigt wird. Damit ist eine besonders günstige kontinuierliche Schleusung von Fischen realisiert. Stehen n>3 Schleusenkammern zur Verfügung, können auf jeder Ebene sogar stets 2 oder mehr geöffnete Türen angeboten werden. Damit steigt allerdings auch der Investitions- und Betriebsaufwand und die Kammern müssten ggf. mit geringerem Strömungsquerschnitt oder größerer Ganghöhe angelegt werden, oder der Durchmesser der Vorrichtung müsste ansteigen.

Im Folgenden werden weitere vorteilhafte Ausgestaltungen und Weiterbildungen der erfindungsgemäßen Vorrichtung erörtert, wobei jedoch gleichzeitig auch Ausgestaltungen und Weiterbildungen der erfindungsgemäßen Verfahren angegeben werden.

Die erfindungsgemäße Vorrichtung ist anzusehen als eine Fischwanderhilfe für alle Zielfischarten mit ggf. regelbarer Lockströmung, die erstmals eine kontinuierliche Schleusung ermöglicht und auch für Bodenwanderer gut nutzbar ist.

In einer vorteilhaften Weiterbildung handelt es sich um ein individuell dotierbares Mehrkammer - Schleusensystem mit Lockstrommöglichkeiten in einer möglichen Anströmkammer am Kopf der Vorrichtung (Oberwasser) und aus einer möglichen Abströmkammer am Fuß der Vorrichtung (Unterwasser).

Sowohl die ober- als auch die unterwasserseitige Anbindung ans Gewässer kann mittels einer Leitströmöffnung ausgeführt werden.

Sowohl eine Dotationsströmung in einer Schleusenkammer als auch eine Lockströmung kann wählbar ausgeführt werden.

Die Abmessungen der Schleusentüren können entsprechend der Schlitzabmessungen von bekannten Vertical Slot Fischpässen ausgeführt werden.

Die gesamte Vorrichtung ist vorzugsweise durchgängig naturnah mit Sohlsubstrat ausgeführt.

Die Schleusensteuerung kann je nach Schleusenkammer individuell auf die Zielfischarten anpassbar sein und kann durch ein fakultatives Monitoringsystem temporär auf Einzelindividuen angepasst werden.

Die Vorrichtung kann bevorzugt in Außendurchmessern von 2-5 m ausgeführt werden, ist dabei jedoch beliebig erweiterbar und anpassbar. Bevorzugte Dotationsströmungen in der Schleusenkammer können von 50 - 500 l/s betragen. Eine zusätzliche Lockströmung kann sowohl bei der Zuströmung als auch bei der Abströmung mit einem Wert von vorzugsweise ca. 500 - 2500 l/s realisiert werden.

In einer bevorzugten Weiterbildung weist die Vorrichtung zwei oder mehr, und besonders bevorzugt drei oder mehr, und insbesondere bevorzugt genau drei strömungstechnisch voneinander getrennte Schleusenkammern auf.

Die Funktion eines solchen Mehrkammer-Schleusensystems der Vorrichtung ist bauartbedingt nicht in einzelne nacheinander folgende Phasen zu gliedern. Bei aus dem Stand der Technik bekannten Schleusensystemen kann i.A. in aufeinanderfolgende Einschwimm-, Hub- bzw. Senk- sowie Ausschwimmphasen untergliedert werden. Diese Phasen können bei der erfindungsgemäßen Vorrichtung jeweils zeitgleich in den Schleusenkammern erfolgen. Damit kann in der Vorrichtung eine kontinuierliche Schleusung ohne ungünstige Verweilzeiten für die Fische erreicht werden.

Der ober- und unterwasserseitige Einstieg in die Vorrichtung erfolgt über vorzugsweise senkrecht betätigte, langsam laufende Schleusentüren. Die mögliche Ausführung der Schleusentüren mit einstellbaren Lockstromöffnungen ermöglicht selbst bei geschlossener Schleusentür eine Wahrnehmung als mögliche Einschwimmöffnung.

Bei Öffnung der Schleusentür kann eine den üblichen Vorgaben entsprechende Dotation und Strömungsgeschwindigkeit eingestellt werden, um die eindeutige Wahrnehmung als Auf- bzw. Abstiegsweg zu erreichen. Die Dauer der Öffnungs- und Schließzeiten sowie die Geschwindigkeiten können für jede Schleusenkammer individuell einstellbar ausgeführt werden.

Die Einzelkammern der Vorrichtung sind vorzugsweise mit Sohlsubstrat ausgeführt und vollständig mit Wasser gefüllt. Die Abmessungen der Schleusenkammern können entsprechend den Vorgaben für Vertical Slot Fischpässe ausgeführt werden.

Die in den Schleusenkammern herrschende geringe Gegenströmung ist für Fische gut wahrnehmbar, aber doch so gering, dass ohne großen Energieaufwand aufgewandert werden kann. Die gewählte Wendelsteigung ermöglicht zudem auch Bodenwanderern (Krebsen etc.) eine einfache Durchwanderung.

Die Schleusenkammer kann je nach Auslegung sogar als relativ großer Lebensraum mit sicherem Vogelschutz angeboten werden.

Am Innendurchmesser der Schleusenkammern kann ein bevorzugt realisiertes Zentralrohr (Innenzylinder) über eine Leiter einen Kontrollzugang während des Schleusenbetriebs und eine natürliche Belichtung der Schleusenkammern ermöglichen. Fakultative Belichtungsfenster können hinsichtlich der Abmessungen wie die Schleusentüren ausgeführt und manuell öffenbar sein. Ein Zentralrohr kann nach oben hochwassersicher verlängert und mit einer lichtdurchlässigen Kuppel verschlossen werden.

Am oberen Ende (Kopf) der Vorrichtung können wasserdichte Wartungszugänge (Mannlöcher) eingebaut sein, die eine vollständige Zugänglichkeit zur Reinigung aber auch zur Befüllung mit Sohlsubstrat ermöglichen können. Zudem können vorzugsweise dort die elektrischen oder hydraulisch automatisierten Betätigungseinrichtungen für die Schleusentüren angeordnet werden. Als Absturzsicherung kann dort ferner ein Geländer vorgesehen werden.

Bei Hochwasserereignissen können vorzugsweise alle Schleusentüren gleichzeitig geschlossen und die Dotationsströmung damit auf ein Minimum reduziert werden, um ein starke Verschmutzung der Schleusenkammern mit Treibgut und Sedimenten zu verhindern. Bei Niedrigwasserphasen ist dies ebenfalls möglich, um zusätzliche Wasserverluste zu vermeiden.

Die Vorrichtung kann unterwasserseitig in eine baulich individuell ausgeführte Abströmkammer eingebaut werden. Die Abströmkammer kann dabei gleichzeitig als Fundament für die Vorrichtung dienen. Die Abströmkammer kann des Weiteren zur gezielten Führung aufstiegswilliger Fische zu den Schleusentüren der Vorrichtung bzw. abgestiegener Fische zu einer Leitströmöffnung dienen. Zur naturnahen Gestaltung kann die Abströmkammer mit Sohlsubstrat gefüllt werden.

Die gute Auffindbarkeit für aufwandernde Fische kann durch entsprechende Gestaltung einer unterwasserseitigen Leitströmöffnung mit Leitwand und Sohlanbindung sowie durch deren entsprechende Dotation, Lockströmung und Strömungsrichtung individuell an die Gewässersituation und Wasserkraftanlage angepasst werden. Diese unterwasserseitige Anbindung kann wie bei Vertical Slot Fischpässen üblich ausgeführt werden.

Im Bereich einer unterwasserseitigen Leitströmöffnung kann ein fakultatives Monitoringsystem die einzelnen Individuen erfassen, einer Fischart zuordnen und die Schleusensteuerung sowie die Lockströmung individuell auf diese Fischart entsprechend einstellen. Ein solches Monitoringsystem ermöglicht zudem die statistische Erfassung der Fischarten und die Funktionskontrolle der Vorrichtung.

An die Vorrichtung kann ferner oberwasserseitig eine Zuströmkammer wasserdicht angebaut werden. Eine solche Zuströmkammer wird vorzugsweise in ihrer Höhe entsprechend den normalen Oberwasserspiegelschwankungen ausgeführt. Eine möglicherweise vorgesehene Zuströmkammer wird bevorzugt so ausgeführt, dass eine gezielte Zuführung abstiegswilliger Fische zu allen Schleusentüren und aufstiegswilliger Fische zu einer fakultativen Leitströmöffnung ermöglicht wird. Zur naturnahen Gestaltung kann die Zuströmkammer bevorzugt mit Sohlsubstrat gefüllt werden.

Die individuell mögliche Einbindung einer oberwasserseitigen Leitströmöffnung in die Hauptströmung mit Sohlanbindung und Leitwand ermöglicht auch eine hohe Lockströmung in eine Zuströmkammer. Damit wird eine gute Eignung der Vorrichtung auch für den Fischabstieg erreicht. Trotzdem können die Anströmgeschwindigkeiten vor der Leitströmöffnung so gering gehalten werden, dass ein unbeabsichtigtes Abdriften aufgestiegener Fische ins Triebwasser vermieden werden kann.

Im Bereich einer oberwasserseitigen Leitströmöffnung kann ein fakultatives Monitoringsystem die einzelnen Individuen erfassen, einer Fischart zuordnen und die Schleusensteuerung sowie die Lockströmung individuell auf diese Fischart entsprechend einstellen. Das Monitoringsystem ermöglicht zudem die statistische Erfassung der Fischarten und eine Funktionskontrolle der Vorrichtung.

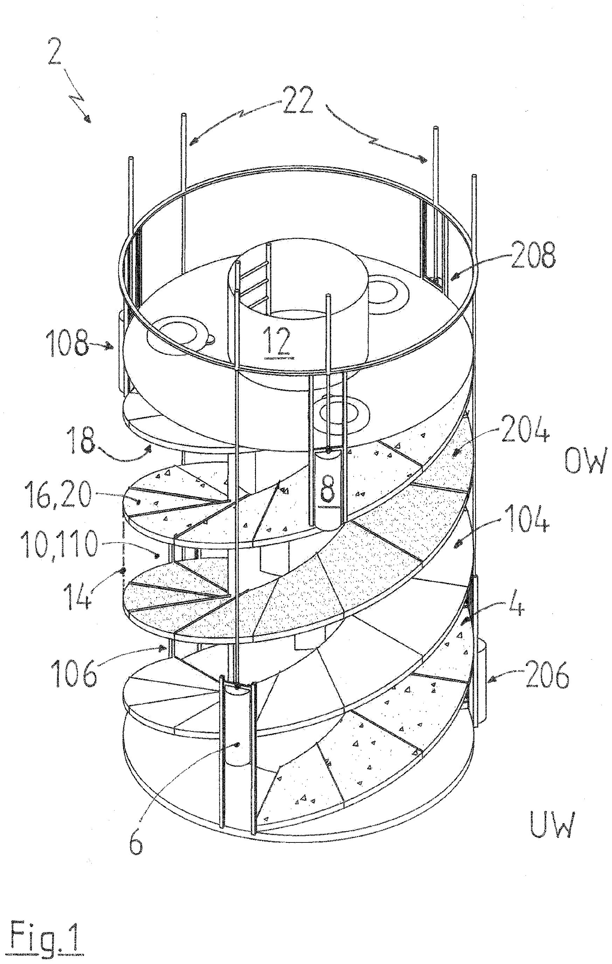

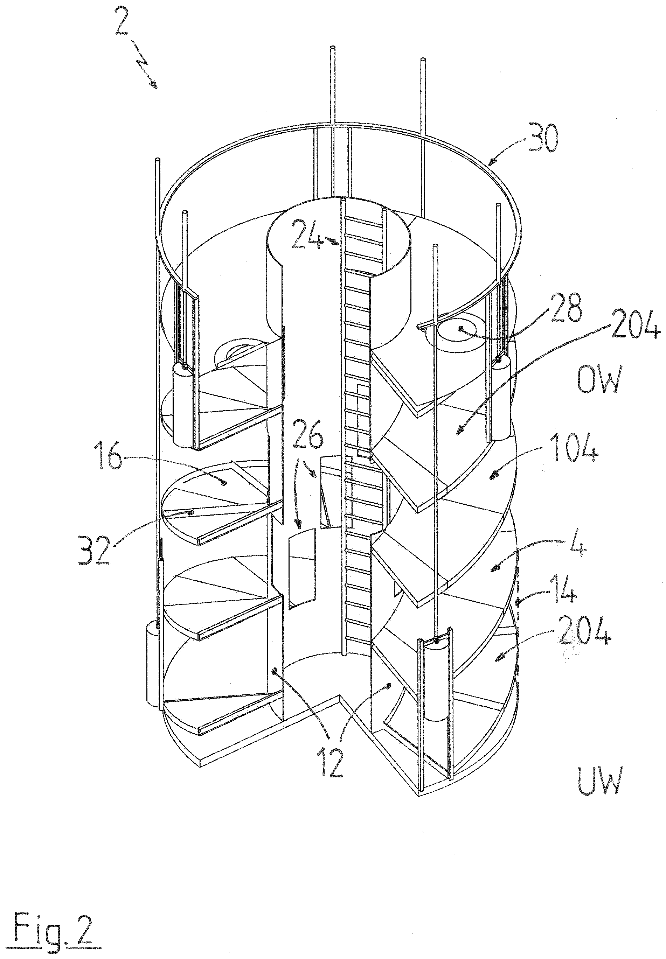

Ergänzend bzw. zusätzlich zu den bereits erörterten vorteilhaften Ausgestaltungen und Weiterbildungen der Lehre wird ein in der Zeichnung im Umfang der **Figuren 1** **und** **2** dargestelltes Ausführungsbeispiel der erfindungsgemäßen Vorrichtung im Folgenden näher erläutert. Das anhand der Zeichnung erörterte Beispiel schränkt die Erfindung jedoch nicht auf das gezeigte Beispiel ein. Bei der Erörterung des Ausführungsbeispiels anhand der Zeichnung werden auch im Allgemeinen bevorzugte Ausgestaltungen und Weiterbildungen, auch bzgl. erfindungsgemäßer Verfahren, der Lehre aufgezeigt.

Es zeigen:
Figur 1 in einer perspektivischen Ansicht ein bevorzugtes Ausführungsbeispiel der erfindungsgemäßen Vorrichtung,
Figur 2 eine geschnittene Darstellung des Ausführungsbeispiels gemäß Fig. 1.

**Figur 1** zeigt in einer perspektivischen Ansicht ein bevorzugtes Ausführungsbeispiel der erfindungsgemäßen Vorrichtung 2 für den Fischaufstieg und/oder den Fischabstieg. Die Vorrichtung 2 dient zur Überwindung einer Höhendifferenz zwischen einem Unterwasser UW und einem Oberwasser OW, und weist eine Schleusenkammer 4, 104, 204 auf, welche sich zwischen dem Unterwasser UW und dem Oberwasser OW erstreckt und diese strömungstechnisch miteinander verbindet. Jede Schleusenkammer 4, 104, 204 ist gegenüber dem Unterwasser UW mit einer unteren Schleusentür 6, 106, 206 und gegenüber dem Oberwasser OW mit einer oberen Schleusentür 8, 108, 208 absperrbar.

Erfindungsgemäß ist vorgesehen, dass sich eine Schleusenkammer 4, 104, 204 in Form einer dreidimensionalen Spirale 10 zwischen dem Unterwasser UW und dem Oberwasser OW erstreckt.

Eine Schleusenkammer 4, 104, 204 weist dabei eine kurvenförmige Längserstreckung auf, wobei sich diese Kurve mit einer Steigung um eine vertikale Achse, hier um die Längsachse der Vorrichtung 2, windet, so dass der Höhenunterschied zwischen Unterwasser UW und Oberwasser OW mit dieser gewundenen Kurve überbrückt wird.

Den wandernden Fischen kann damit eine stets moderate Steigung angeboten werden, welche sie problemlos durchwandern können. Die Vorrichtung 2 kann damit auch große Höhenunterschiede bedienen, benötigt aber gleichzeitig wenig Platz.

Bei der gezeigten Vorrichtung 2 sind in besonders vorteilhafter Weise insgesamt drei strömungstechnisch voneinander getrennte Schleusenkammern 4, 104, 204 mit jeweils einer unteren Schleusentür 6, 106, 206 und jeweils einer oberen Schleusentür 8, 108, 208 realisiert.

Die dargestellte Vorrichtung ist im Wesentlichen als Hohlzylinder ausgebildet, wobei die Innenwand 12 des Hohlzylinders die Innenwand 12 der Schleusenkammern 4, 104, 204 bildet und die Außenwand 14 des Hohlzylinders die Außenwand 14 der Schleusenkammern 4, 104, 204 bildet.

Aus Gründen der Übersichtlichkeit ist die Außenwand 14 hier nur angedeutet dargestellt.

Folglich ist hier jede Schleusenkammer 4, 104, 204 in Bezug auf sämtliche Richtungen senkrecht zur Längsrichtung (dies entspricht der Strömungsrichtung des Wassers) der Kammer 4, 104, 204 geschlossen ausgeführt und weist insofern einen Boden 16, eine Innenwand 12, eine Außenwand 14 und eine Decke 18 auf, und ist somit vollständig mit Wasser flutbar. Die Schleusenkammern 4, 104, 204 weisen ferner, in deren Längsrichtung gesehen, einen rechteckigen Strömungsquerschnitt auf.

Gleichzeitig bildet in besonders vorteilhafter Weise, gesehen über die Höhe der Vorrichtung 2, die Decke 18 einer Schleusenkammer 4, 104, 204 gleichzeitig den Boden 16 einer darüber angeordneten weiteren Schleusenkammer 4, 104, 204, nämlich den Boden 16 des betreffenden Ganges dieser weiteren Schleusenkammer 4, 104, 204.

In weiter vorteilhafter Weise erstreckt sich jede Schleusenkammer 4, 104, 204 hier nicht nur in Form einer dreidimensionalen Spirale 10, sondern in Form einer zylindrischen Spirale 110 (auch Wendel oder Helix) zwischen dem Unterwasser UW und dem Oberwasser OW. Innerhalb der gezeigten Vorrichtung 2 mit drei Schleusenkammern 4, 104, 204 sind diese als dreigängige Wendel 110 angeordnet. Der vertikale Abstand zwischen benachbarten Kammern 4, 104, 204 beträgt dabei 1/3 der Ganghöhe eine Kammer 4, 104, 204. Auf eine horizontale Ebene bezogen sind alle Kammern 4, 104, 204 um einen Winkel von 120° (1/3 Umdrehung) gegeneinander versetzt.

Der Boden 16 jeder Kammer 4, 104, 204 kann durchgängig mit Sohlsubstrat 20 ausgestattet werden. Für unterschiedliche Organismen können innerhalb einer Vorrichtung 2 verschiedene Substrate 20 eingesetzt werden. Dies wird in Fig. 1 durch die unterschiedliche Beschaffenheit der Böden 16 veranschaulicht.

Jede Schleusentür 6, 106, 206, 8, 108, 208 ist über eine jeweilige Betätigungseinrichtung 22 öffenbar und schließbar. Die Betätigung kann dabei elektrisch oder auch hydraulisch und vorzugsweise automatisiert erfolgen. Technische Details zu den Betätigungseinrichtungen 22 sind nicht weiter dargestellt, da sich diese für den Fachmann aus dem Stand der Technik ergeben und somit zwanglos eine Auslegung erfolgen kann.

Die Vorrichtung 2 weist ferner Schleusentüren 6, 106, 206, 8, 108, 208 auf, welche auch in geschlossenem Zustand für eine Dotationsströmung passierbar sind. Eine vorteilhafte Dotationsströmung in der Schleusenkammer 4, 104, 204 kann dabei sowohl zum Anlocken der Fische in als auch zum Durchleiten der Fische durch die Kammer 4, 104, 204 genutzt werden. Bevorzugte Dotationsströmungen können dabei von 50 - 500 l/s betragen.

Die Vorrichtung 2 kann auf der Ebene des Unterwassers UW in eine baulich individuell ausgeführte Abströmkammer eingebaut werden, welche darüber hinaus als Fundament dienen kann. Zusätzlich oder alternativ kann auf der Ebene des Oberwassers OW an den Kopf der Vorrichtung 2 eine Zuströmkammer wasserdicht angebaut sein. Sowohl eine Abströmkammer als auch eine Zuströmkammer sind jedoch hier aus Gründen der Übersichtlichkeit nicht dargestellt.

**Figur 2** zeigt das Ausführungsbeispiel der Vorrichtung 2 gemäß Fig. 1 in einer gedrehten Position und in einer Schnittdarstellung, wobei für die Darstellung ein Zylindersektor aus der Vorrichtung 2 entfernt worden ist.

Bereits in Fig. 1 dargestellte und diesbezüglich erläuterte Bezugszeichen sind aus Gründen der Übersichtlichkeit hier zum Teil nicht erneut aufgetragen worden. Für die Erläuterung solcher Bezugszeichen und der zugehörigen technischen Merkmale wird zur Vermeidung von Wiederholungen vollumfänglich auf die oben stehende Beschreibung zu Fig. 1 verwiesen.

In dieser Darstellung ist besonders gut die Innenwand 12 des Hohlzylinders der Vorrichtung 2 zu erkennen. Die Innenwand 12 bildet dabei einen Innenzylinder des Hohlzylinders. Über eine Leiter 24 wird ein Kontrollzugang ermöglicht. Ferner sind in der Innenwand 12 Belichtungsöffnungen 26 vorgesehen, welche eine natürliche Belichtung der Schleusenkammern 4, 104, 204 ermöglicht. Hierzu trägt das obere Ende des Innenzylinders eine lichtdurchlässige Kuppel (nicht dargestellt). Die Belichtungsöffnungen 26 sind mit öffenbaren Belichtungsfenstern bestückt, damit ergibt sich gleichzeitig (im entleerten Zustand) ein Wartungszugang zu der Schleusenkammer 4, 104, 204.

Am oberen Ende der Vorrichtung 2 sind ferner wasserdicht verschließbare Wartungszugänge 28 (Mannlöcher) vorgesehen, welche einen Zugang zu jeder Schleusenkammer 4, 104, 204 ermöglichen. Als Absturzsicherung ist ferner ein Geländer 30 vorgesehen.

In der mittleren Höhe der Vorrichtung 2 ist ferner links ein Boden 16 dargestellt, welcher kein Sohlsubstrat aufweist. Daher werden sich auf dem Boden 16 radial erstreckende Bleche 32 sichtbar, welche zur Abstützung von Sohlsubstrat 20 (Fig. 1) dienen, jedoch alternativ oder zusätzlich auch die Strömung durch eine Kammer 4, 104, 204 in wünschenswerter Weise regulieren können.

Die Vorrichtung 2 aus den Fig. 1 und 2 lässt sich bevorzugt so betreiben, dass, bezogen auf eine Schleusenkammer 4, 104, 204, stets zumindest eine, nämlich die obere Schleusentür 8, 108, 208, oder die untere Schleusentür 6, 106, 206, geschlossen ist. Dies verhindert sowohl ein Leerlaufen als auch eine zu große Strömung in der jeweiligen Kammer 4, 104, 204.

Alternativ oder zusätzlich kann während des Betriebs der Vorrichtung 2 bei geöffneter unterer Schleusentür 6, 106, 206 die geschlossene obere Schleusentür 8, 108, 208 von einer Dotationsströmung passiert werden, und/oder kann bei geöffneter oberer Schleusentür 8, 108, 208 die geschlossene untere Schleusentür 6, 106, 206 von einer Dotationsströmung passiert werden.

Alternativ oder zusätzlich lässt sich die Vorrichtung 2 bevorzugt so betreiben, dass zu jedem Zeitpunkt sowohl von den drei oberen Schleusentüren 8, 108, 208 der Ebene des Oberwassers OW als auch von den drei unteren Schleusentüren 6, 106, 206 der Ebene des Unterwassers UW jeweils zumindest eine geschlossen ist, zumindest eine betätigt wird und zumindest eine geöffnet ist. Somit kann eine besonders günstige kontinuierliche Schleusung von Fischen erreicht werden.

### Bezugszeichen

- 2: Vorrichtung für den Fischaufstieg/-abstieg
- 4, 104, 204: Schleusenkammer
- 6, 106, 206: Untere Schleusentür
- 8, 108, 208: Obere Schleusentür
- 10: Dreidimensionale Spirale
- 110: Zylindrische Spirale (Wendel, Helix)
- 12: Innenwand
- 14: Außenwand
- 16: Boden
- 18: Decke
- 20: Sohlsubstrat
- 22: Betätigungseinrichtung (Schleusentür)
- 24: Leiter
- 26: Belichtungsöffnung
- 28: Wartungszugang (Mannloch)
- 30: Geländer
- 32: Blech (Boden)
- OW: Oberwasser
- UW: Unterwasser

## Patentansprüche

1. Vorrichtung (2) für den Fischaufstieg und/oder den Fischabstieg zur Überwindung einer Höhendifferenz zwischen einem Unterwasser (UW) und einem Oberwasser (OW), wobei die Vorrichtung (2) eine Schleusenkammer (4, 104, 204) aufweist, welche sich zwischen dem Unterwasser (UW) und dem Oberwasser (OW) erstreckt und diese strömungstechnisch miteinander verbindet, und welche gegenüber dem Unterwasser (UW) mit einer unteren Schleusentür (6, 106, 206) und gegenüber dem Oberwasser (OW) mit einer oberen Schleusentür (8, 108, 208) absperrbar ist, **dadurch gekennzeichnet, dass** die Schleusenkammer (4, 104, 204) in Bezug auf sämtliche Richtungen senkrecht zur Längsrichtung der Kammer (4, 104, 204) geschlossen ausgeführt ist und vollständig mit Wasser flutbar ist, und sich die Schleusenkammer (4, 104, 204) in Form einer dreidimensionalen Spirale (10) zwischen dem Unterwasser (UW) und dem Oberwasser (OW) erstreckt.

2. Vorrichtung (2) nach Anspruch 1, **dadurch gekennzeichnet, dass** sich die Schleusenkammer (4, 104, 204) in Form einer zylindrischen Spirale (110), d.h. wendel- bzw. helixförmig, zwischen dem Unterwasser (UW) und dem Oberwasser (OW) erstreckt.

3. Vorrichtung (2) nach Anspruch 1 oder 2, **dadurch gekennzeichnet, dass** die Vorrichtung (2) zwei oder mehr strömungstechnisch voneinander getrennte Schleusenkammern (4, 104, 204) mit jeweils einer unteren Schleusentür (6, 106, 206) und einer oberen Schleusentür (8, 108, 208) aufweist.

4. Vorrichtung (2) nach einem der Ansprüche 1 bis 3, **dadurch gekennzeichnet, dass** die Vorrichtung (2) genau drei strömungstechnisch voneinander getrennte Schleusenkammern (4, 104, 204) mit jeweils einer unteren Schleusentür (6, 106, 206) und einer oberen Schleusentür (8, 108, 208) aufweist.

5. Vorrichtung (2) nach Anspruch 3 oder 4, **dadurch gekennzeichnet, dass** innerhalb einer Vorrichtung (2) mit n Schleusenkammern (4, 104, 204) diese als n-gängige Wendel (110) bzw. Helix angeordnet sind.

6. Vorrichtung (2) nach einem der Ansprüche 1 bis 5, **dadurch gekennzeichnet, dass** eine Schleusenkammer (4, 104, 204) einen Boden (16), eine Innenwand (12), eine Außenwand (14) und eine Decke (18) aufweist.

7. Vorrichtung (2) nach einem der Ansprüche 1 bis 6, **dadurch gekennzeichnet, dass**, gesehen über die Höhe der Vorrichtung (2), die Decke (18) einer Schleusenkammer (4, 104, 204) gleichzeitig den Boden (16) des darüber liegenden Ganges derselben Schleusenkammer (4, 104, 204) oder den Boden (16) einer darüber angeordneten weiteren Schleusenkammer (4, 104, 204) bildet.

8. Vorrichtung (2) nach einem der Ansprüche 1 bis 7, **dadurch gekennzeichnet, dass** eine Schleusenkammer (4, 104, 204), in Längsrichtung gesehen, einen rechteckigen Strömungsquerschnitt aufweist.

9. Vorrichtung (2) nach einem der Ansprüche 1 bis 8, **dadurch gekennzeichnet, dass** die Vorrichtung (2) als Hohlzylinder ausgebildet ist, wobei die Innenwand (12) des Hohlzylinders die Innenwand (12) der Schleusenkammer (4, 104, 204) bzw. der Schleusenkammern (4, 104, 204) bildet und die Außenwand (14) des Hohlzylinders die Außenwand (14) der Schleusenkammer (4, 104, 204) bzw. der Schleusenkammern (4, 104, 204) bildet.

10. Vorrichtung (2) nach Anspruch 9, **dadurch gekennzeichnet, dass** die oberen Schleusentüren (8, 108, 208) und/oder die unteren Schleusentüren (6, 106, 206) in der Außenwand (14) des Hohlzylinders ausgebildet sind.

11. Vorrichtung (2) nach einem der Ansprüche 1 bis 10, **dadurch gekennzeichnet, dass** die Schleusentüren (6, 106, 206, 8, 108, 208) auch in geschlossenem Zustand für eine Dotationsströmung passierbar sind.

12. Verfahren zum Betrieb einer Vorrichtung (2) nach einem der Ansprüche 1 bis 11, **dadurch gekennzeichnet, dass**, bezogen auf eine Schleusenkammer (4, 104, 204), stets zumindest eine Schleusentür (6, 106, 206, 8, 108, 208), nämlich die obere (8, 108, 208) oder die untere Schleusentür (6, 106, 206), geschlossen ist.

13. Verfahren nach Anspruch 12, **dadurch gekennzeichnet, dass** bei geöffneter unterer Schleusentür (6, 106, 206) die geschlossene obere Schleusentür (8, 108, 208) von einer Dotationsströmung passiert wird, und/oder dass bei geöffneter oberer Schleusentür (8, 108, 208) die geschlossene untere Schleusentür (6, 106, 206) von einer Dotationsströmung passiert wird.

14. Verfahren zum Betrieb einer Vorrichtung (2) nach einem der Ansprüche 3 bis 11, welche drei oder mehr Schleusenkammern (4, 104, 204) aufweist, **dadurch gekennzeichnet, dass** zu jedem Zeitpunkt von den zumindest drei Schleusentüren (6, 106, 206, 8, 108, 208) sowohl der Ebene des Oberwassers (OW) als auch der Ebene des Unterwassers (UW) jeweils zumindest eine geschlossen ist, zumindest eine betätigt wird und zumindest eine geöffnet ist.

## Claims

1. A device (2) for enabling ascending and/or descending of fish to overcome a height difference between a bottom water (UW) and a head water (OW), the device (2) comprising a sluice chamber (4, 104, 204), which extends between the bottom water (UW) and the head water (OW) and fluidically connecting them to each another, and which can be locked off with a lower sluice gate (6, 106, 206) with respect to the bottom water (UW) and with an upper sluice gate (8, 108, 208) with respect to the head water (OW),
**characterized in that** the sluice chamber (4, 104, 204) is provided in a closed state with respect to all directions perpendicular to the longitudinal direction of the chamber (4, 104, 204), and thereby being completely floodable with water, and the sluice chamber (4, 104, 204) extends in the form of a three-dimensional spiral (10) between the bottom water (UW) and the head water (OW).

2. The device (2) according to claim 1, **characterized in that** the sluice chamber (4, 104, 204) extends between the bottom water (UW) and the head water (OW) in the form of a cylindrical spiral (110), i.e. helically or coiled, respectively.

3. The device (2) according to claim 1 or 2, **characterized in that** the device (2) has two or more sluice chambers (4, 104, 204) which are fluidically separated from each another, each having a lower sluice gate (6, 106, 206) and an upper sluice gate (8, 108, 208).

4. The device (2) according to any one of the claims 1 to 3, **characterized in that** the device (2) has exactly three sluice chambers (4, 104, 204) fluidically separated from each another, each having a lower sluice gate (6, 106, 206) and an upper sluice gate (8, 108, 208).

5. The device (2) according to claim 3 or 4, **characterized in that** inside a device (2) having n sluice chambers (4, 104, 204), said sluice chambers are arranged as an n-flight coil (110) or helix.

6. The device (2) according to any one of the claims 1 to 5, **characterized in that** a sluice chamber (4, 104, 204) comprises a bottom (16), an inner wall (12), an outer wall (14) and a cover (18).

7. The device (2) according to any one of the claims 1 to 6, **characterized in that**, as seen across the height of the device (2), the cover (18) of a sluice chamber (4, 104, 204) simultaneously forms the bottom (16) of the overlying corridor of the same sluice chamber (4, 104, 204) or the bottom (16) of another sluice chamber (4, 104, 204) arranged on top thereof.

8. The device (2) according any one of the claims 1 to 7, **characterized in that** a sluice chamber (4, 104, 204) has a rectangular flow cross-section, as viewed in the longitudinal direction.

9. The device (2) according to any one of the claims 1 to 8, **characterized in that** the device (2) is formed as a hollow cylinder, the inner wall (12) of the hollow cylinder forming the inner wall (12) of the sluice chamber (4, 104, 204) or the sluice chambers (4, 104, 204), respectively, and the outer wall (14) of the hollow cylinder forming the outer wall (14) of the sluice chamber (4, 104, 204) or the sluice chambers (4, 104, 204), respectively.

10. The device (2) according to claim 9, **characterized in that** the upper sluice gates (8, 108, 208) and/or the lower sluice gates (6, 106, 206) are formed in the outer wall (14) of the hollow cylinder.

11. The device (2) according to any one of the claims 1 to 10, **characterized in that** the sluice gates (6, 106, 206, 8, 108, 208) may also be passed in the closed state by a donation flow.

12. A method for operating a device (2), wherein the device (2) accords with any one of the claims 1 to 11, **characterized in that**, with respect to a sluice chamber (4, 104, 204), at least one sluice gate (6, 106, 206, 8, 108, 208), i.e. either the upper (8, 108, 208) or the lower sluice gate (6, 106, 206), is always closed.

13. The method according to claim 12, **characterized in that**, when the lower sluice gate (6, 106, 206) is open, a donation flow is passed through the closed upper sluice gate (8, 108, 208) and/or, when the upper sluice gate (8, 108, 208) is open, a donation flow is passed through the closed lower sluice gate (6, 106, 206).

14. A method for operating a device (2), wherein the device (2) accords with any one of the claims 1 to 11, and comprises three or more sluice chambers (4, 104, 204), **characterized in that**, at any point of time, out of the at least three sluice gates (6, 106, 206, 8, 108, 208) of both the level of the head water (OW) and the level of the bottom water (UW), at least one is closed, at least one is operated, and at least one is open.

## Revendications

1. Dispositif (2) pour faire monter et/ou descendre les poissons afin de surmonter une différence de hauteur entre une eau d'aval (UW) et une eau d'amont (OW), le dispositif (2) comprenant un compartiment d'écluse (4, 104, 204) qui s'étend entre l'eau d'aval (UW) et l'eau d'amont (OW) en les reliant fluidiquement l'une avec l'autre, et qui peut être obturé par une vanne inférieure (6, 106, 206) par rapport à l'eau d'aval (UW) et par une vanne supérieure (8, 108, 208) par rapport à l'eau d'amont (OW),
**caractérisé en ce que** le compartiment d'écluse (4, 104, 204) est prévu dans un état fermé par rapport à toutes les directions perpendiculaires à la direction longitudinale du compartiment (4, 104, 204) et peut ainsi être complètement inondée d'eau, et le compartiment d'écluse (4, 104, 204) s'étendant sous forme d'une spirale tridimensionnelle (10) entre l'eau inférieure (UW) et l'eau supérieure (OW).

2. Dispositif (2) selon la revendication 1, **caractérisé en ce que** le compartiment d'écluse (4, 104, 204) s'étend entre l'eau d'aval (UW) et l'eau d'amont (OW) sous forme d'une spirale cylindrique (110), c'est-à-dire en hélice ou enroulé, respectivement.

3. Dispositif (2) selon la revendication 1 ou 2, **caractérisé en ce que** le dispositif (2) comprend deux ou plusieurs compartiments d'écluse (4, 104, 204) qui sont fluidiquement séparés l'un de l'autre, chacune comprenant une vanne inférieure (6, 106, 206) et une vanne supérieure (8, 108, 208).

4. Dispositif (2) selon l'une des revendications 1 à 3, **caractérisé en ce que** le dispositif (2) présente exactement trois compartiments d'écluse (4, 104, 204) séparés fluidiquement l'un de l'autre, chacun ayant une vanne inférieure (6, 106, 206) et une vanne supérieure (8, 108, 208).

5. Dispositif (2) selon la revendication 3 ou 4, **caractérisé en ce que**, à l'intérieur d'un dispositif (2) comportant n compartiments d'écluse (4, 104, 204), lesdits compartiments d'écluse sont disposés en une bobine (110) ou hélice à n volées.

6. Dispositif (2) selon l'une des revendications 1 à 5, **caractérisé en ce qu'**un compartiment d'écluse (4, 104, 204) comprend une base (16), une paroi intérieure (12), une paroi extérieure (14) et un couvercle (18).

7. Dispositif (2) selon l'une des revendications 1 à 6, **caractérisé en ce que** le couvercle (18) d'un compartiment d'écluse (4, 104, 204) simultanément forme la base (16) du couloir superposé de la même compartiment d'écluse (4, 104, 204) ou la base (16) d'une autre compartiment d'écluse (4, 104, 204) disposé là-dessus, vu en travers du dispositif (2).

8. Dispositif (2) selon l'une des revendications 1 à 7, **caractérisé en ce qu'**un compartiment d'écluse (4, 104, 204) présente une section transversale d'écoulement en forme rectangulaire, vue dans la direction longitudinale.

9. Dispositif (2) selon l'une des revendications 1 à 8, **caractérisé en ce que** le dispositif (2) est réalisé en forme d'un cylindre creux, la paroi intérieure (12) du cylindre creux formant la paroi intérieure (12) du compartiment d'écluse (4, 104, 204) ou des compartiments d'écluse (4, 104, 204), respectivement, et la paroi extérieure (14) du cylindre creux formant la paroi extérieure (14) du compartiment d'écluse (4, 104, 204) ou des compartiments d'écluse (4, 104, 204), respectivement.

10. Dispositif (2) selon la revendication 9, **caractérisé en ce que** les vannes supérieures (8, 108, 208) et/ou les vannes inférieures (6, 106, 206) sont ménagées dans la paroi extérieure (14) du cylindre creux.

11. Dispositif (2) selon l'une des revendications 1 à 10, **caractérisé en ce que** les vannes d'écluse (6, 106, 206, 8, 108, 208) peuvent également être franchies à l'état fermé par un écoulement de dotation.

12. Procédé de fonctionnement un dispositif (2) selon l'une des revendications 1 à 11, **caractérisé en ce que**, par rapport à un compartiment d'écluse (4, 104, 204), au moins une vanne d'écluse (6, 106, 206, 8, 108, 208), c'est-à-dire soit la vanne supérieure (8, 108, 208) ou soit la vanne inférieure (6, 106, 206), est toujours fermée.

13. Procédé selon la revendication 12, **caractérisé en ce que**, lorsque la vanne inférieure d'écluse (6, 106, 206) est ouverte, on fait passer un écoulement de dotation à travers la vanne fermée (8, 108, 208) et/ou, lorsque la vanne supérieure (8, 108, 208) est ouverte, on fait passer un écoulement de dotation à travers la vanne inférieure fermée (6, 106, 206).

14. Procédé de fonctionnement d'un dispositif (2) selon l'une des revendications 3 à 11, comprenant trois compartiments d'écluse (4, 104, 204) ou plus, **caractérisé en ce que**, à tout moment, au moins l'une des au moins trois vannes (6, 106, 206, 8, 108, 208) du niveau de l'eau d'amont (OW) et au moins l'une des au moins trois vannes (6, 106, 206, 8, 108, 208) du niveau de l'eau d'aval (UW) est fermée, au moins une est en fonctionnement, et au moins une est ouverte.
